(19) Europäisches Patentamt
European Patent Office
Office européen des brevets

(11) EP 3 660 814 A1

(12) **EUROPEAN PATENT APPLICATION**
published in accordance with Art. 153(4) EPC

(43) Date of publication:
03.06.2020 Bulletin 2020/23

(51) Int Cl.:
*G08G 5/00* (2006.01)

(21) Application number: 18838892.0

(22) Date of filing: 08.05.2018

(86) International application number:
PCT/CN2018/086082

(87) International publication number:
WO 2019/019764 (31.01.2019 Gazette 2019/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.07.2017 CN 201710614622
25.07.2017 CN 201710614549

(71) Applicant: Wenzhou Yunhang Information
Technology Ltd.
Zhejiang 325000 (CN)

(72) Inventors:
• ZHENG, Qiang
  Zhejiang 325000 (CN)
• WANG, Qiubi
  Zhejiang 325000 (CN)
• LI, Shizhen
  Zhejiang 325000 (CN)
• MAO, Yingjun
  Zhejiang 325000 (CN)

(74) Representative: Bandpay & Greuter
30, rue Notre-Dame des Victoires
75002 Paris (FR)

(54) **FLIGHT TIME EXCHANGE SYSTEM AND EXCHANGE METHOD**

(57) The present invention relates to a flight time exchange system and a corresponding method. The method includes the following steps: S1: obtaining a flight time exchange request or a flight time exchange requirement of at least one flight; S2: generating a candidate flight time exchange list based on content of the flight time exchange request or the flight time exchange requirement, where exchangeable flight times are sorted in the list according to a given rule; S3: sequentially performing exchange negotiation with flights having target flight times based on the candidate flight time exchange list; and S4: when information that a flight time exchange is accepted is obtained, determining a flight time exchange result, and publishing the flight time exchange result to flights between which a time exchange is performed. Based on the present invention, various participants involved in traffic operation can perform efficient coordination and a rapid exchange.

FIG. 5

## Description

### TECHNICAL FIELD

The present invention belongs to the field of civil aviation transportation technologies, and in particular, to flight or airport management, especially a flight time exchange system and method.

### BACKGROUND ART

In a current civil aviation system, a CDM system (collaborative decision making system, Collaborative Decision Making) is mainly used to allocate and manage flight times (departure times and other related times).

The CDM system is a multiagent cooperation and coordination operation concept interaction system based on resource sharing and information interaction, and can establish a set of unified and efficient work procedures between support units (an air traffic controller, an airport, a company, and the like) during civil aviation operation.

One of important functions of the CDM system is flight allocation, referred to as a "calculated flight time" (the "calculated flight time" is a designated term, is Calculated Flight Time in English, is a CFT for short, and refers to that the CDM system calculates and allocates flight times, such as a "calculated takeoff time" (CTOT, Calculated TakeOff Time) and a "calculated off-break time" (COBT, Calculated Off-Break Time). An "off-break time" can be understood as a flight readiness time.

During operation of the CDM system, participants (such as an airline, an air traffic controller, and an airport) involved in transportation operation enter related information of each flight on a CDM system platform. The CDM system cooperates with the participants to determine a CFT of each flight, and publishes the determined CFT to all the participants involved in transportation operation. Thereafter, each participant supports each flight according to the CFT published by the CDM system, so as to achieve orderly aviation transportation operation.

The current CDM system mainly determines the CFT based on the following several steps.

1. Collect release interval requirements during traffic control
First, the CDM system collects the interval requirements issued by various air traffic control units during traffic control. The release interval requirements are in various ways. For example, a flight interval on an air route is restricted to be not less than a specified distance, a flight interval on an air route is restricted to be not shorter than a specified time, and a flight interval from a takeoff airport to an air route is restricted to be not less than a specified distance. The flight interval requirements are determined by the air traffic control units based on traffic control factors. There are a plurality of traffic control factors, such as a traffic flow, weather, and military activities.
2. Collect flight-related information and determine a flight sorting queue
The CDM system collects the flight-related information entered by participants involved in traffic operation and sorts flights. The flight-related information includes a planned off-break time of a flight, an estimated off-break time of the flight, a target off-break time of the flight, an estimated landing time of the flight, and other content.
3. Determine a CFT of each flight based on the flight sorting queue and the flight-related information with reference to the release interval requirements during traffic control.

The CFT of each flight is calculated based on sorting information and an off-break time (the planned/estimated/target off-break time) of each flight with reference to the release interval requirements during traffic control.

However, the current CDM system has the following limitations on calculating a flight time.

1. If flight times are significantly advanced due to a reduction in traffic control, some flights often cannot depart at an advanced CFT because pre-flight preparations (cleaning, boarding, loading, and the like) are not arranged. Consequently, the flight time is wasted.

2. According to a current operating mode, if a flight misses a given CFT, another flight often cannot depart at the flight time, that is, cannot use the time. Consequently, the flight time is wasted, and the flight that misses the given time will be moved to a later time (earlier times are all used by other flights).

During actual operation, to prevent a flight from missing a CFT for various reasons, an airline operator, an air traffic control unit, or an airport sometimes exchanges this flight with another flight, that is, exchanges CFTs. Such an exchange is a relatively ideal manner for avoiding a long wait caused by missing a CFT. However, the current exchange manner has the following problems:

Small exchange range-Currently, due to a limitation on information sharing between airlines, air traffic control units, and airports, the above-mentioned flight time exchange can only be performed within a small range (for example, within an airline or within an airport), and a range of flights that can be selected for an exchange is small.

Ambiguous supply-demand relationship-In a current operating mode, it is hopeful to obtain a flight with an earlier CFT, and also to obtain a flight with a later CFT. However, due to a lack of an effective platform, participants involved in transportation operation cannot grasp enough requirement information of other flights. A flight that has a time exchange requirement cannot intuitively learn specific flights that meet a condition and hope to make an exchange. The supply-demand relationship can only be clarified through experience and sequential inquiries.

Low coordination efficiency-At present, an exchange between flights is mainly determined through manual communication and coordination. Consequently, a lot of time is consumed and efficiency is low.

## SUMMARY

(1) Technical problem to be resolved

The present invention is to resolve a problem that an existing flight time exchange manner has a small exchange range, a supply-demand relationship is unclear, and coordination efficiency is low.

(2) Technical solutions

To resolve the foregoing technical problem, the present invention provides a flight time exchange system, including a processor and a memory, where the memory stores a machine-readable instruction, and the processor is configured to execute the instruction, to perform the following steps: step S1: obtaining a flight time exchange request or a flight time exchange requirement of at least one flight; step S2: generating a candidate flight time exchange list based on content of the flight time exchange request or the flight time exchange requirement, where exchangeable flight times are sorted in the list according to a given rule; step S3: sequentially performing exchange negotiation with flights having target flight times based on the candidate flight time exchange list; and if a flight agrees to a flight time exchange, returning information that the flight time exchange is accepted; or if none of the flights having the target flight times agree to a flight time exchange, returning information that the flight time exchange request is rejected; and step S4: when the information that the flight time exchange is accepted is obtained, determining a flight time exchange result, and publishing the flight time exchange result to flights between which a time exchange is performed.

In a preferred implementation of the present invention, the given rule includes at least one of "a principle favorable to this flight", "a principle favorable to some flights", "a principle favorable to global flights", "an exchange success probability principle of this flight", "an exchange success probability principle of some flights", and "an exchange success probability principle of global flights".

In a preferred implementation of the present invention, step S3 includes: sending flight exchange negotiation information to a target flight, and determining, by the target flight after receiving the negotiation information, whether to perform an exchange, where the negotiation information includes flight information of a flight as an exchange initiator.

In a preferred implementation of the present invention, the flight time exchange system generates the candidate flight time exchange list based on flight exchange value FEV, and the FEV is determined based on both flight value FV and a matching success rate SR that are obtained after an exchange.

In a preferred implementation of the present invention, when SR is less than or equal to $SR_1$, $FEV = SR \times FV_0$; when SR is greater than $SR_1$ and is less than $SR_2$, $FEV = SR \times FV$; and when SR is greater than or equal to $SR_2$, $FEV = SR_0 \times FV$, where $FV_0$ may be a specified value, and can be set by a staff member or the system based on relevant operating experience or operating requirements. If $FV_0$ is a reference flight value, $SR_0$ may be a specified value, and may be set by a staff member or the system based on relevant operating experience or operating requirements. If $SR_0$ is a reference matching success rate, $SR_1$ is a first reference matching success rate and $SR_2$ is a second reference matching success rate.

In a preferred implementation of the present invention, a reference matching success rate $SR_m$ may also be added, and when SR is less than or equal to $SR_m$, $FEV = SR \times FV_n$. $FV_n$ may be a specified value, and may be set by a staff member or the system based on relevant operating experience or operating requirements. For example, $FV_n$ may be 'zero or a specified negative value'. $FV_n$ indicates that when the matching success rate SR is less than or equal to $SR_m$, an exchange possibility is less than an acceptable value, and flight exchange value is zero or negative.

In a preferred implementation of the present invention, in step S2, the candidate flight time exchange list is a many-to-many flight time exchange solution list; and in step S3, a final flight exchange solution is generated based on the flight time exchange solution list. Preferably, the system further performs the following step: sequentially performing exchange negotiation with flights having target flight times in the flight time exchange solutions sorted based on total flight exchange value; and if all flights in a flight time exchange solution agree to a flight time exchange, returning information that the flight time exchange is accepted; or if each flight time exchange solution has a flight that does not agree to an exchange, returning information that a flight time exchange request is rejected, thereby obtaining a solution that is finally accepted by each flight; or performing exchange negotiation on possible exchange solutions of flights in a flight time exchange solution list, analyzing actual flight exchange value corresponding to matching results for a plurality of solutions, and selecting a proper solution based on the actual flight exchange value.

In a preferred implementation of the present invention, the actual flight exchange value is calculated based on at least one of "a principle favorable to some flights", "a principle favorable to global flights", "an exchange success probability principle of some flights", and "an exchange success probability principle of global flights".

In a preferred implementation of the present invention, step S1 includes predicting the flight time exchange requirement, and inquiring whether a flight having a potential flight time exchange requirement needs to perform a flight time exchange.

In a preferred implementation of the present invention, step S1 includes calculating a difference between an estimated ready time ERT and a calculated flight time CFT, and when the difference is greater than a predetermined value, considering that the flight has the flight time exchange requirement.

In a preferred implementation of the present invention, in step S3, each flight presets a flight time exchange condition, and when the flight time exchange system initiates exchange negotiation with the flight, each flight automatically performs exchange negotiation based on the preset flight time exchange condition.

In a preferred implementation of the present invention, the flight time exchange condition includes a condition that flight value FV and/or a matching success rate SR need to meet.

In a preferred implementation of the present invention, the system further performs step S5: after a flight time exchange, analyzing whether each flight is capable of completing support at a new time to perform a subsequent operation.

In a preferred implementation of the present invention, the flight time exchange system is connected or embedded in an aviation operation system, and obtains flight information and/or flight environment information from the aviation operation system.

The present invention further provides a flight time exchange method, including the following steps: step S1: obtaining a flight time exchange request or a flight time exchange requirement of at least one flight; step S2: generating a candidate flight time exchange list based on content of the flight time exchange request or the flight time exchange requirement, where exchangeable flight times are sorted in the list according to a given rule; step S3: sequentially performing exchange negotiation with flights having target flight times based on the candidate flight time exchange list; and if a flight agrees to a flight time exchange, returning information that the flight time exchange is accepted; or if none of the flights having the target flight times agree to a flight time exchange, returning information that the flight time exchange request is rejected; and step S4: when the information that the flight time exchange is accepted is obtained, determining a flight time exchange result, and publishing the flight time exchange result to flights between which a time exchange is performed.

(3) Beneficial effects

Based on the flight time exchange system and the corresponding method that are provided in the present invention, various participants involved in traffic operation can perform efficient coordination and a rapid exchange. In addition, in a preferred manner of the present invention, flight time exchange information can be published and learned within a global range (cross-control areas, cross-airport, and cross-airline) and a flight time exchange is facilitated. Therefore, based on the present invention, flight time use efficiency can be increased, and orderly flight operation can be ensured.

**BRIEF DESCRIPTION OF THE DRAWINGS**

FIG. 1 is a schematic diagram of a connection architecture of a flight time exchange system according to an implementation of the present invention;

FIG. 2 is a schematic diagram of a connection architecture of a flight time exchange system according to another implementation of the present invention;

FIG. 3 is a schematic flowchart of obtaining information by a flight time exchange system according to the present invention;

FIG. 4 is a schematic flowchart of an input-output process when a flight time exchange system performs a flight time exchange operation according to the present invention;

FIG. 5 is a schematic flowchart of a flight time exchange operation in a flight time exchange system according to a first embodiment of the present invention;

FIG. 6 is a distribution diagram of times related to a flight on a timeline;

FIG. 7 is a schematic diagram of a flight time exchange solution in a flight time exchange system according to a third embodiment of the present invention;
FIG. 8 is a schematic flowchart of a flight time exchange operation in a flight time exchange system according to a fourth embodiment of the present invention; and
FIG. 9, FIG. 10, and FIG. 11 shows examples of an architecture of a flight time exchange system and a specific aviation management system according to the present invention.

## DETAILED DESCRIPTION

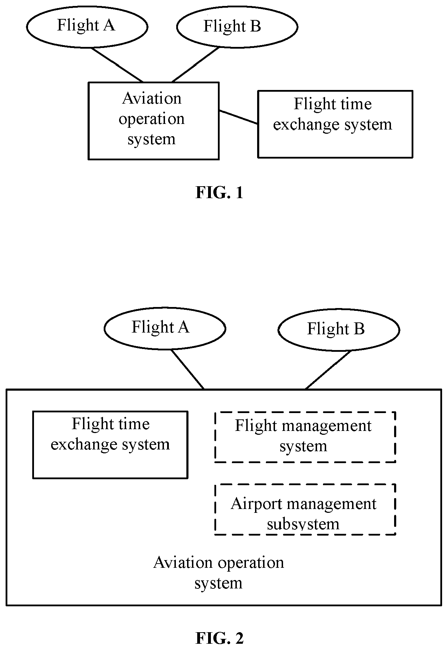

FIG. 1 is a schematic diagram of a connection architecture of a flight time exchange system according to an implementation of the present invention. As shown in FIG. 1, the flight time exchange system is independent of an existing aviation operation system, and performs data interaction with the aviation operation system.

The "aviation operation system" in the present invention is any management system that participates in aviation operation and can obtain information about a plurality of flights. In different application scenarios, the aviation operation system may be an airport management system or a flight management system in an airport, may be a flight management system of an airline, may be a joint flight management system shared by a plurality of airports or a plurality of airlines, or may be a non-airport or non-airline third-party management system, such as a collaborative decision making system, a flight management system, a flight ticket sale system, or an air traffic control system. Alternatively, the "aviation operation system" may be a collective name of a plurality of systems having different functions.

That is, the present invention is not limited to any type of aviation operation system, provided that information about a flight can be obtained. The system and method in the present invention may be both accessed and may be used to implement an efficient flight time exchange.

In FIG. 1, an example of two of a plurality of flights that can interact with the aviation operation system is shown, in other words, a flight A and a flight B. The flight time exchange system obtains information about each flight through interaction with the aviation operation system.

FIG. 2 is a schematic diagram of a connection architecture of a flight time exchange system according to another implementation of the present invention. In the implementation, the flight time exchange system may be embedded into an aviation operation system. It may also be considered that the flight time exchange system is used as a subsystem of the aviation operation system.

In this case, the flight time exchange system may perform information interaction with each flight directly or by using another subsystem of the aviation operation system. For example, in FIG. 2, the aviation operation system may further include a flight management system or an airport management system. The flight management system is used to manage flight information of each flight in real time, and the airport management system is used to manage operation information of a specific airport. The flight time exchange system may directly perform information interaction with each flight through a main interface of the aviation operation system, or may perform information interaction with each flight by using the flight management system or the airport management system.

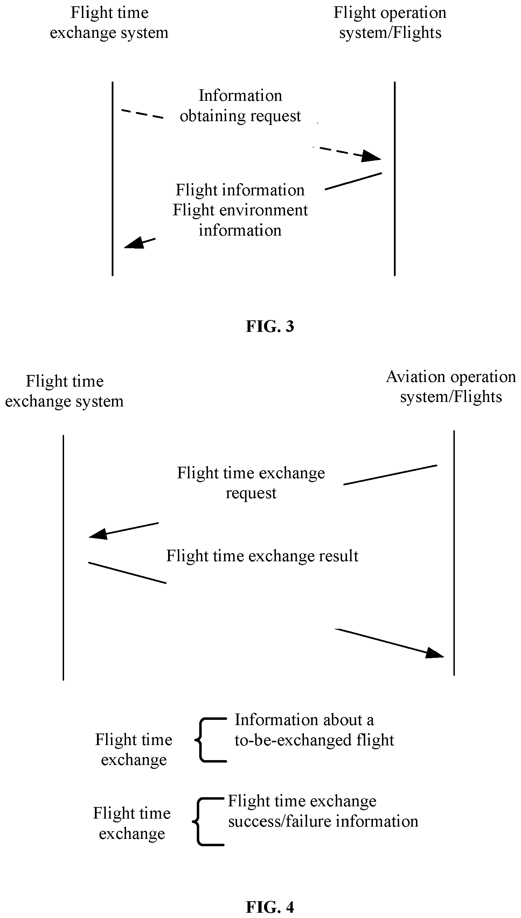

FIG. 3 is a schematic flowchart of obtaining information by a flight time exchange system according to the present invention. As shown in FIG. 3, the flight time exchange system may first send an information obtaining request to a flight operation system or each flight, and then the flight operation system or each flight sends corresponding information to the flight time exchange system. Alternatively, the flight operation system actively sends information to the flight time exchange system in a predetermined manner. The information obtained by the flight time exchange system includes two parts: one part is flight information (Flight Information, FI) that may be obtained from the flight operation system or may be directly obtained from each flight. The flight information is real-time status information of the flight, for example, including takeoff and landing airports of the flight, a takeoff time, a landing time, whether the flight is punctual, and delay duration. The other part is flight environment information (Flight Environmental Information, FEI) that is generally obtained from the flight operation system. Some of the flight environment information may also be obtained from the flight, including a natural environment in which the flight operates, such as weather, a wind direction, a wind speed, and temperature, and also including control information of the flight, such as traffic information of takeoff and landing airports of the flight and flight control information.

Obtaining the flight information and the flight environment information is the premise on which the flight time exchange system performs a flight time exchange operation.

FIG. 4 is a schematic flowchart of an input-output process when a flight time exchange system performs a flight time exchange operation according to the present invention. As shown in the figure, the flight time exchange system first receives a flight time exchange request from an aviation operation system or each flight, and after performing an exchange operation, returns a flight time exchange result to the aviation operation system and/or each flight.

The flight time exchange request includes at least information about a to-be-exchanged flight, and preferably, further includes flight time exchange requirement information. The flight time exchange requirement information is an exchange requirement of a flight, for example, "as early as possible", "as early as possible after 15:00", or a determined time range. If there is no flight time exchange requirement information, a default exchange requirement such as "as early as possible" may be used to perform a flight time exchange.

The flight time exchange result includes at least flight time exchange success/failure information, and if an exchange succeeds, should further include flight time exchange information. The flight time exchange information is updated flight information after the exchange succeeds.

The flight time exchange system in the present invention may be implemented by any apparatus or device that has a data processing capability. Generally, the device that has a data processing capability includes a processor and a memory, the memory stores a machine-readable instruction, and the processor is configured to execute the instruction, to perform flight time exchange steps. The specific exchange steps in the present invention are as follows:

Step S1: Obtain a flight time exchange request or a flight time exchange requirement of at least one flight.

Step S2: Generate a candidate flight time exchange list based on content of the flight time exchange request or the flight time exchange requirement, where exchangeable flight times are sorted in the list according to a given rule.

Step S3: Sequentially perform exchange negotiation with flights having target flight times based on the candidate flight time exchange list; and if a flight agrees to a flight time exchange, return information that the flight time exchange is accepted; or if none of the flights having the target flight times agree to a flight time exchange, return information that the flight time exchange request is rejected.

Step S4: When the information that the flight time exchange is accepted is obtained, determine a flight time exchange result, and publish the flight time exchange result to flights between which a time exchange is performed.

The present invention is further described below with reference to the accompanying drawings and specific embodiments.

**First Embodiment**

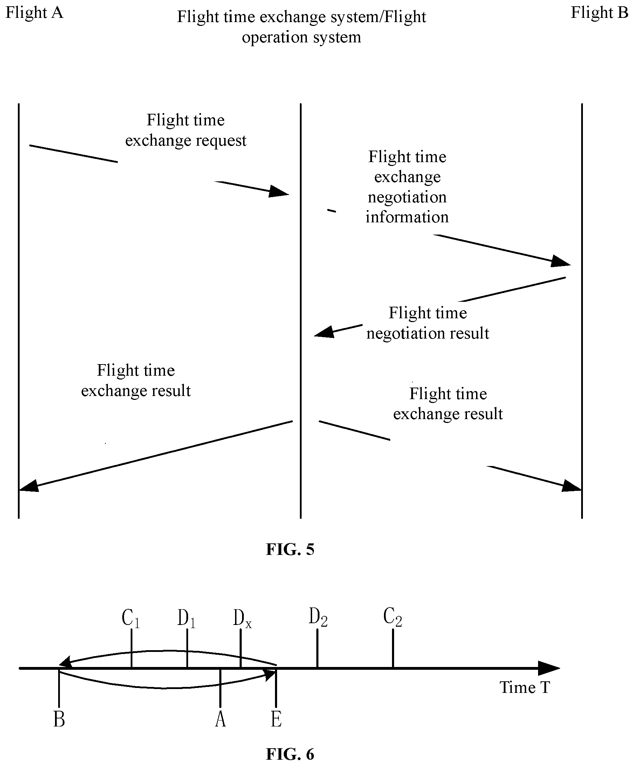

FIG. 5 is a schematic flowchart of a flight time exchange operation in a flight time exchange system according to the first embodiment of the present invention. Description is provided in this embodiment by using an exchange process between a flight A and a flight B as an example.

Step S1. The flight time exchange system or a flight operation system into which the flight time exchange system is embedded obtains a flight time exchange request of the flight A.

Step S2: The flight time exchange system generates a candidate flight time exchange list based on content of the flight time exchange request after obtaining the flight time exchange request of the flight A, where exchangeable flight times are sorted in the list according to a given rule.

The given rule may be a "principle favorable to this flight", a "principle favorable to some flights", a "principle favorable to global flights", an "exchange success probability principle of this flight", an "exchange success probability principle of some flights", an "exchange success probability principle of global flights", or the like. The "principle favorable to this flight" is that an exchange result is the most favorable to a flight as an exchange request initiator. The "principle favorable to some flights" is that an exchange result is the most favorable to some flights. The "principle favorable to global flights" is that an exchange result is the most favorable to comprehensive consideration of all flights. The "exchange success probability principle" is that target flight times are sorted based on probabilities that an exchange may succeed. Certainly, the present invention is not limited to the foregoing principles, and another sorting principle may also be used.

Step S3: The flight time exchange system sequentially performs exchange negotiation with flights having target flight times based on the candidate flight time exchange list; and if a flight agrees to a flight time exchange, returns information that the flight time exchange is accepted; or if none of the flights having the target flight times agree to a flight time exchange, returns information that the flight time exchange request is rejected.

In this embodiment, assuming that a flight having a target flight time is the flight B, the flight time exchange system sends flight time exchange negotiation information to the flight B, and the flight B determines whether to perform an exchange after receiving the negotiation information. The negotiation information includes original flight information of a flight as an exchange initiator. To increase an exchange success rate, the flight time exchange system may set a bonus mechanism (such as points), to provide a bonus to a flight accepting an exchange. In this way, the negotiation information in this step may include bonus information.

Step S4: When obtaining the exchange acceptance information , the flight time exchange system determines a flight time exchange result, and publishes the flight time exchange result to both flights between which a time exchange is performed and the flight operation system. The flight operation system updates flight information, and notifies updated flight information to a related party. The related party is, for example, support personnel in an airport.

**Second Embodiment**

A flight time exchange system in the second embodiment of the present invention is a preferred implementation of the first embodiment. Specifically, in step S2 of the first embodiment, the flight time exchange system generates the candidate flight time exchange list based on flight exchange value (Flight Exchanging Value, FEV). The FEV includes content in two aspects: A first aspect is flight value (Flight Value, FV) obtained after an exchange, and the other aspect is a matching success rate (Success Rate, SR).

The flight value FV is a superiority degree of a flight on which an exchange is performed. After a time exchange, a short flight waiting time or a small loss caused by a delay leads to a greater advantage and higher flight value. If the flight value is measured by only using a waiting time, the flight value may be represented by using the following mathematical formula:

$$FV = f_1(T_w, Wr),$$

where

FV is flight value, $f_1$ is a flight value function, $T_w$ is a flight waiting time, and Wr is a flight value weight.

FIG. 6 is an example of a distribution diagram of times related to a flight on a timeline. Parameters that may be used during a flight exchange are specifically described below with reference to FIG. 6.

First, Fn is used to indicate a flight whose time needs to be exchanged, and Fm is used to indicate a flight whose time is exchanged. The parameters used during the flight time exchange are shown in the following table (it should be noted that, during specific implementation, content in the following table may be selectively used, in other words, some or all of the content may be used):

| Parameter name | Parameter symbol |
|---|---|
| Estimated ready time | $Ta$ |
| Calculated flight time (CFT) | $Tb$ |
| Current reachable time range | $Tc_1$ to $Tc_2$ |
| Time range to which an exchange is expected to be performed | $Td_1$ and $Td_2$ $Td_x$ |
| Exchange preference rate weight | $Wf$ $Wf_1$, $Wf_2$, and $Wf_n$ |
| Exchange value weight | $Wr$ $Wr_1$, $Wr_2$, and $Wr_n$ |
| To-be-exchanged time | $Te$ |

| Parameter name | Estimated ready time | Calculated flight time (CFT) | Current reachable time range | Time range to which an exchange is expected to be performed | Exchange preference rate weight | Exchange value weight | To-be-exchanged time |
|---|---|---|---|---|---|---|---|
| Specific description of the parameters | Flight time corresponding to an estimated flight ready time | Original calculated time allocated by an aviation operation system to a flight | $Tc_1$ is an earliest estimated ready time and $Tc_2$ is a latest time that the flight can accept. | $Td_1$ is an earliest value of the time range to which an exchange is expected to be performed; $Td_2$ is a latest value of the time range to which an exchange is expected to be performed; Tdx is a reference value of an optimal time that is expected to be exchanged | Wf is each exchange preference factor weight, for example, an exchange preference company, cruising height layer (which can be understood as different air lanes) corresponding to an exchange preference flight, or an exchange preference model (flight plans, implementable flight speeds, and altitude ranges corresponding to different models are different). Wf may be: $Wf = F_f(Wf_1, Wf_2 ..., Wf_n)$ Wf may be set according to a relevant regulation or a service requirement | Wr is a full weight of various exchange value, such as a traffic control degree value (traffic control degrees may be different for different destinations on a same operating route), a traffic control impact value, a task type, a quantity of passengers, and a destination type corresponding to a flight, or a result factor of a subsequent flight (a traffic control degree value, a traffic control impact value, a quantity of passengers, and the like of the subsequent flight). Wr may be set according to a relevant regulation or a service requirement: $Wr = F_r(Wr_1, Wr_2 ..., Wr_n)$, where Wr may be set according to a relevant regulation or a service requirement. | Flight time that can be exchanged |

Referring to FIG. 6, the foregoing parameters are indicated by using position points on the timeline, and in this way, can be converted into parameters in the following table.

| Parameter name | Estimated ready position point | Given position point | Reachable position range | Position range to which an exchange is expected to be performed | Exchange preference rate weight | Exchange value weight | To-be-exchanged position point |
|---|---|---|---|---|---|---|---|
| Position point name | A | B | $C_1$ to $C_2$ | $D_1$ and $D_2$ $D_X$ | Wf $Wf_1$ and $Wf_2$, $Wf_n$ | Wr $Wr_1$ and $Wr_2$ $Wr_n$ | E |

Therefore, the flight value may also be understood as a route distance between each flight position point E and a position point A. Alternatively, $FV = f_1$ (the distance from E to A, Wr) During simplified processing, $FV = |E - A| \times Wr$.

The matching success rate SR is a matching success rate for a flight time exchange. Similar to the foregoing correspondence, SR may be understood as a value of each flight position point E close to $[D_1, D_2]$ or a distance between E and $D_x$. A mathematical formula $SR = f_2$ (the distance between E and $D_x$, Wf) may be used for indication, and is simplified as $SR = |E - D_x| \times Wf$. $D_x$ is an optimal expected position point.

The optimal expected position point $D_x$ is a time point that is relatively preferred by an operator. $D_x$ not only may ensure that the flight is likely to complete support before $D_x$, but also may avoid a long flight delay.

$D_x$ can be obtained in a plurality of manners, for example, manually set according to experience of operating personnel.

When $D_x$ is obtained through analysis based on a formula obtained by converting the operating experience, statistical data, and the like, the formula may be $D_x = D_1 + T_p$. $D_1$ is an optimal expected reference position point, and $T_p$ may be a value obtained by different airports or different companies based on operating experience and statistical data.

The flight exchange value FEV may be determined based on both the flight value FV and the matching success rate SR. In this embodiment, based on experience and a statistical law, the FEV is preferably obtained through calculation in the following manner.

Herein, it is preset first that reference flight value is $FV_0$, a reference matching success rate is $SR_0$, a first reference matching success rate is $SR_0$, and a second reference matching success rate is $SR_1$, where

(1) when SR is less than or equal to $SR_1$, $FEV = SR \times FV_0$;
(2) when SR is greater than $SR_1$ and is less than $SR_2$, $FEV = SR \times FV$; and
(3) when SR is greater than or equal to $SR_2$, $FEV = SR_0 \times FV$

SRi and $SR_2$ can be set by a user according to experience or a corresponding rule. A preferred manner is: $SR_1$ is 85% and $SR_2$ is 95%. $FV_0$ is a constant value and can be set according to an actual requirement. For example, the value of $FV_0$ can be set to a reference exchange value. $SR_0$ is also a constant value and can be set according to an actual requirement. For example, the value of $SR_0$ can be set to 1.

Further, a reference matching success rate $SR_m$ may also be added. Based on the foregoing conditions, a case may be further added, that is, when SR is less than or equal to $SR_m$, $FEV = SR \times FV_n$. $FV_n$ may be a specified value, and may be set by a staff member or the system based on relevant operating experience or an operating requirement. For example, $FV_n$ may be 'zero or a specified negative value'. $FV_n$ indicates that when the matching success rate SR is less than or equal to $SR_m$, an exchange possibility is less than an acceptable value, and the flight exchange value is zero or negative.

In FIG. 6, assuming that the flight A is exchanged from a given position point B to a position point E, the flight B that is originally at the position point E is exchanged from the position point E to the position point B. In this embodiment, because flight exchange value obtained after the flight B is exchanged to the position point B is not considered, the exchange method is based on flight exchange value of a single flight.

In this embodiment, step S4 may further include an optional step S5. After a flight time exchange, in this step, whether each flight is capable of completing support at a new time is analyzed through setting to perform a subsequent operation. It is considered that if a quantity of exchanged flights is relatively large, a time exchange causes a change in a support order and a task. Therefore, it is hoped to verify whether these exchanged flights can complete, in accordance with a support resource capability, support as scheduled for subsequent operations.

**Third Embodiment**

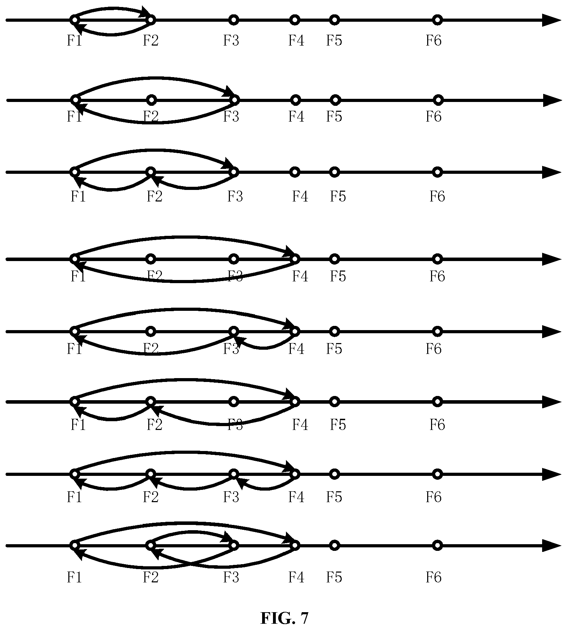

FIG. 7 is a schematic diagram of a flight time exchange solution in a flight time exchange system according to the third embodiment of the present invention.

Different from the first embodiment, in this embodiment, in step S2, the candidate flight time exchange list is a many-to-many flight time exchange solution list. In addition, in step S3, flight time exchange negotiation needs to be performed a plurality of times for one exchange solution.

During a flight time exchange, flights can be exchanged with each other, that is, a many-to-many and matchable meshed relationship is formed to form different matching paths on a plurality of timelines.

As shown in FIG. 7, it is assumed that there are flights F1, F2, .... When the flight F1 initiates a flight time exchange request, considering a crossed exchange relationship between flights, there may be a plurality of flight time exchange solutions. In this embodiment, for each exchange solution that may exist, total flight exchange value TFEV of each exchange solution is calculated.

$$TFEV = \sum_{i=1}^{n} FEV_i$$

$FEV_i$ is flight exchange value of an $i^{th}$ unidirectional exchange.

In FIG. 7, each curved arrow represents a unidirectional exchange. The FEV may be calculated based on the method in the second embodiment, that is, the FEV is determined based on both flight value FV obtained after a unidirectional exchange and the matching success rate SR of the exchange. It should be noted that, in order to avoid a too heavy calculation burden of the flight time exchange solution, a longest time distance for a time exchange of a single flight (that is, a maximum length of each curved arrow in FIG. 7) may be limited.

Therefore, in step S2 in this embodiment, the flight time exchange system generates a candidate flight time exchange list based on content of the flight time exchange request after obtaining the flight time exchange request of the flight A, and flight time exchange solutions are sorted in the list according to total flight exchange value.

Further, in step S3, the flight time exchange system generates a final flight exchange solution based on the flight time exchange solution list.

In a manner, the flight time exchange system sequentially performs exchange negotiation with flights having target flight times in the flight time exchange solutions sorted based on total flight exchange value; and if all flights in a flight time exchange solution agree to a flight time exchange, returns information that the flight time exchange is accepted; or if each flight time exchange solution has a flight that does not agree to an exchange, returns information that a flight time exchange request is rejected, thereby obtaining a solution that is finally accepted by each flight (specifically, how the flight accepts the solution is defined by a user according to a specified rule).

In another manner, exchange negotiation is performed on possible exchange solutions of flights in the flight time exchange solution list, actual exchange value corresponding to matching results of a plurality of solutions is analyzed, and a proper solution is selected based on the actual exchange value. During specific operation, when an exchange of a flight fails, exchange value of the flight may be set to 0, or a corresponding quantity is subtracted from total value. In addition, the total flight exchange value may be calculated according to specified rules. Each component of a formula corresponding to a result value is calculated, and a corresponding weight is accordingly increased (for example, when it is favorable to some flights, a weight of FEV corresponding to each of the some flights is increased). That is, actual flight exchange value may be set according to a preference of a user, that is, according to a "principle favorable to some flights" ("exchange value of some flights is preferential"), a "principle favorable to global flights" ("exchange value of overall flights is preferential"), an "exchange success probability principle of some flights" ("exchange success probabilities of some flights are preferential"), and an "exchange success probability principle of global flights" ("exchange success probabilities of global flights are preferential").

**Fourth Embodiment**

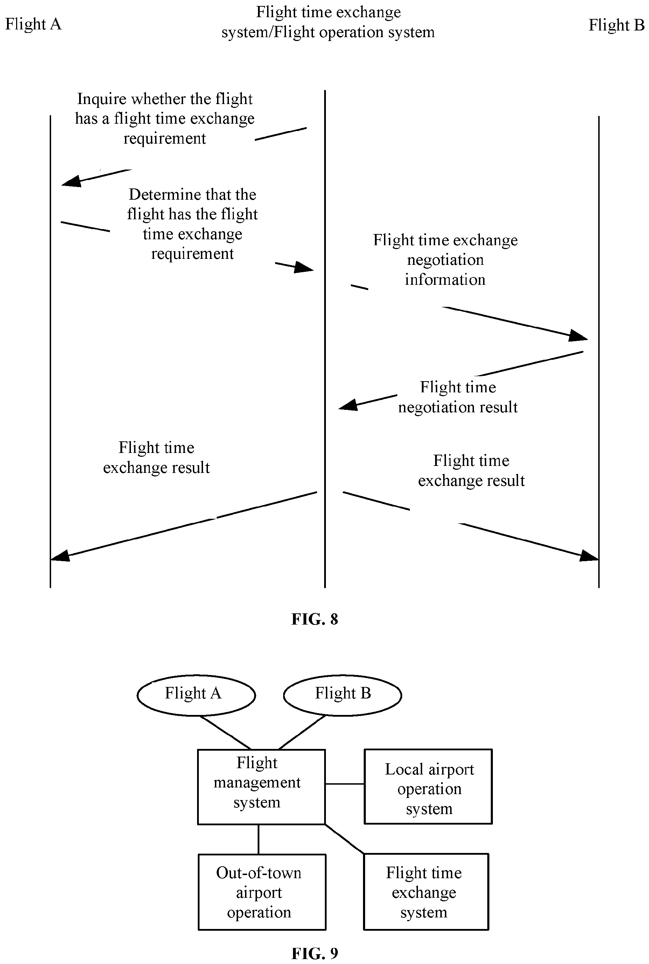

FIG. 8 is a schematic flowchart of a flight time exchange operation in a flight time exchange system according to the fourth embodiment of the present invention. Different from the second and third embodiments, in the fourth embodiment, in step S2, the flight time exchange system or a flight operation system into which the flight time exchange system is embedded predicts a flight time exchange requirement, inquires whether a flight having a potential flight time exchange requirement needs to perform a flight time exchange, and performs steps S2 to S4 after determining that the flight time exchange needs to be performed.

When whether the flight having a potential flight time exchange requirement is analyzed, flight information and/or flight environment information needs to be analyzed and processed. In an implementation, a difference Ta-Tb between an "estimated ready time" (ERT, Estimated Ready Time) Ta and a calculated flight time (CFT) is calculated, and if the difference is greater than a predetermined value, it is considered that the flight has the flight time exchange requirement. The CFT may be provided by an existing aviation management system. Therefore, a key of this embodiment is to calculate the ERT, in other words, Ta. To calculate the estimated ready time, one or more of the following information needs to be used.

(1) Flight plan information

The flight plan information is takeoff time information in a flight plan, such as a time table in the flight plan or information about an estimated flight takeoff time in the flight plan. For example, the information may be an estimated takeoff time collected from FPL (Filed Flight Plan) data in the civil aviation dynamic message system.

(2) Dynamic status of a preorder flight of a flight

The information may be collected from the existing aviation management system, such as a flight operation support system, a civil aviation dynamic message system, or an AFTN SITA message system.

(3) Real-time flight support situation

The real-time flight support situation is a real-time support progress of each support task for a flight, for example, whether all passengers have checked in, whether all security checks have been completed, whether pre-flight checks have been completed, and a cargo loading status in the flight.

(4) Support resources and support capability of a support party (an airline or an airport party)

The support resources and support capability are a quantity of existing support resources and a specific support capability, such as a quantity of refueling vehicles, a refueling capability, a quantity of ferry vehicles, or a specific passenger capacity.

(5) Scheduling plan of support tasks of the support party

The scheduling plan is a specific support scheduling situation of the support party during various types of support, such as a support scheduling order when various types of support are performed on a plurality of flights, a time at which each flight is to be supported by using each support resource, an estimated support time, or other content. If there is a relatively complete and accurate support task scheduling plan, an estimated support ready time for each flight can be relatively accurately reckoned.

(6) Other related extended data

Other related extended data is, for example, real-time situation data of a passenger, such as real-time status information of the passenger. Whether the passenger has reached an airport can be learned based on a related position. A specific check-in time, a time for going through a security check, and the like of the passenger can be learned based on data sources. The related extended data may further be real-time big data information of a cargo.

In this embodiment, an arrival time of a non-specific flight, an arrival time of its preorder flight, and a planned takeoff time may be obtained based on the above-mentioned data. On this basis, the ERT may be reckoned by integrating a real-time support situation, a support capability, a support scheduling task, and other content for each flight.

It should be noted that how to calculate the ERT based on the above flight information and/or flight environment information is not specifically limited in the present invention. A person skilled in the art can make settings according to an actual aviation operation system. However, to obtain the flight information and/or the flight environment information in real time, an architecture between the flight time exchange system and the aviation management system in the present invention may be in various forms, such as an architecture using cloud computing.

In this embodiment, in S3, automatic matching can also be implemented through system analysis and calculation. The matching analysis can be performed according to values specified by each operator (or rules developed by each operator). When information such as an exchange success rate or exchange value is greater than a fixed value (or a combination of the foregoing information meets a designated rule), an operator deemed to a time exchange automatically agrees to a time exchange and matching. That is, each flight presets a flight time exchange condition.

When the flight time exchange system initiates exchange negotiation with the flight, each flight automatically performs exchange negotiation according to the preset flight time exchange condition.

FIG. 9, FIG. 10, and FIG. 11 shows examples of an architecture of a flight time exchange system and a specific aviation management system according to the present invention. In these examples, the aviation management system includes a flight management system, a local airport operation system, and an out-of-town airport operation system.

In FIG. 9, as a central system, the flight management system can separately interact with the local airport management system and the out-of-town airport operation system, and also interact with each flight. Therefore, the flight management system can obtain flight information and flight environment information of each flight, and the flight time exchange system can directly obtain various information for calculating an ERT from the flight management system.

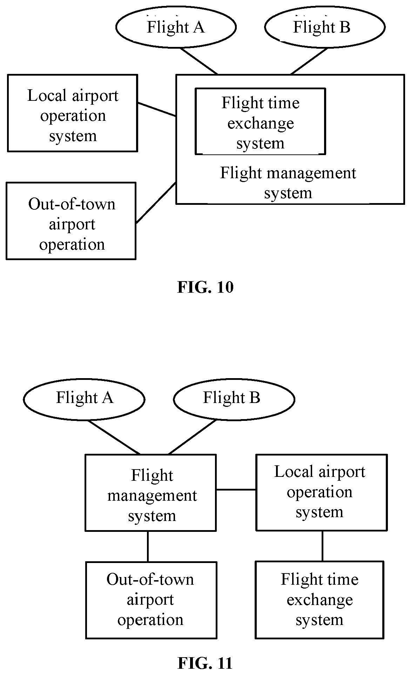

A manner in FIG. 10 is similar to that in FIG. 9. However, as a subsystem of the flight management system, the flight time exchange system directly obtains flight information and flight environment information of each flight by using another system or interface of the flight management system. A manner in FIG. 11 is also similar to that in FIG. 9. However, the flight time exchange system interacts only with the local airport operation system. Obviously, in such a manner, the flight time exchange system can obtain, only by using the local airport operation system, the flight information and the flight environment information of each flight that are obtained by the flight management system.

The foregoing specific embodiments further describe the objectives, technical solutions, and beneficial effects of the present invention. It should be understood that the foregoing is only specific embodiments of the present invention and is not intended to limit the present invention. Any modification, equivalent replacement, or improvement made within the spirit and principle of the present invention shall all fall within the protection scope of the present invention.

**Claims**

1. A flight time exchange system, comprising a processor and a memory, wherein the memory stores a machine-readable instruction, and the processor is configured to execute the instruction, to perform the following steps:

   step S1: obtaining a flight time exchange request or a flight time exchange requirement of at least one flight;
   step S2: generating a candidate flight time exchange list based on content of the flight time exchange request or the flight time exchange requirement, wherein exchangeable flight times are sorted in the list according to a given rule.
   step S3: sequentially performing exchange negotiation with flights having target flight times based on the candidate flight time exchange list; and if a flight agrees to a flight time exchange, returning information that the flight time exchange is accepted; or if none of the flights having the target flight times agree to a flight time exchange, returning information that the flight time exchange request is rejected.
   step S4: when the information that the flight time exchange is accepted is obtained, determining a flight time exchange result, and publishing the flight time exchange result to flights between which a time exchange is performed.

2. The flight time exchange system according to claim 1, wherein the given rule comprises at least one of a "principle favorable to this flight", a "principle favorable to some flights", a "principle favorable to global flights", an "exchange success probability principle of this flight", an "exchange success probability principle of some flights", and an "exchange success probability principle of global flights".

3. The flight time exchange system according to claim 1, wherein step S3 comprises: sending flight exchange negotiation information to a target flight, and determining, by the target flight after receiving the negotiation information, whether to perform an exchange, wherein the negotiation information comprises information about a flight as an exchange initiator.

4. The flight time exchange system according to claim 1, wherein the flight time exchange system generates the candidate flight time exchange list based on flight exchange value FEV, and the FEV is determined based on both flight value FV and a matching success rate SR that are obtained after an exchange.

5. The flight time exchange system according to claim 4, wherein
   when SR is less than or equal to $SR_1$, $FEV = SR \times FV_0$;
   when SR is greater than SRi and is less than $SR_2$, $FEV = SR \times FV$; and
   when SR is greater than or equal to $SR_2$, $FEV = SR_0 \times FV$, wherein
   FVo is a specified value, $SR_0$ is a specified value, SRi is a first reference matching success rate, and $SR_2$ is a second reference matching success rate.

**6.** The flight time exchange system according to claim 4, wherein when SR is less than or equal to $SR_m$, FEV = SR $\times$ $FV_n$, wherein $SR_m$ is a reference matching success rate, and $FV_n$ may be a specified value.

**7.** The flight time exchange system according to claim 1, wherein
in step S2, the candidate flight time exchange list is a many-to-many flight time exchange solution list; and
in step S3, a final flight exchange solution is generated based on the flight time exchange solution list.

**8.** The flight time exchange system according to claim 1, wherein the system further performs the following step, in step S3:

sequentially performing exchange negotiation with flights having target flight times in flight time exchange solutions sorted based on total flight exchange value; and if all flights in a flight time exchange solution agree to a flight time exchange, returning information that the flight time exchange is accepted; or if each flight time exchange solution has a flight that does not agree to an exchange, returning information that a flight time exchange request is rejected, thereby obtaining a solution that is finally accepted by each flight; or
performing exchange negotiation on possible exchange solutions of flights in a flight time exchange solution list, analyzing actual flight exchange value corresponding to matching results for a plurality of solutions, and selecting a proper solution based on the actual flight exchange value.

**9.** The flight time exchange system according to claim 8, wherein the actual flight exchange value is calculated based on at least one of a "principle favorable to some flights", a "principle favorable to global flights", an "exchange success probability principle of some flights", and an "exchange success probability principle of global flights".

**10.** The flight time exchange system according to claim 1, wherein step S1 comprises predicting the flight time exchange requirement, and inquiring whether a flight having a potential flight time exchange requirement needs to perform a flight time exchange.

**11.** The flight time exchange system according to claim 10, wherein step S1 comprises calculating a difference between an estimated ready time ERT and a calculated flight time CFT, and when the difference is greater than a predetermined value, considering that the flight has the flight time exchange requirement.

**12.** The flight time exchange system according to claim 11, wherein in step S3, each flight presets a flight time exchange condition, and when the flight time exchange system initiates exchange negotiation with the flight, each flight automatically performs exchange negotiation based on the preset flight time exchange condition.

**13.** The flight time exchange system according to claim 12, wherein the flight time exchange condition comprises a condition that flight value FV and/or a matching success rate SR need to meet.

**14.** The flight time exchange system according to claim 1, further comprising step S5: after a flight time exchange, analyzing whether each flight is capable of completing support at a new time to perform a subsequent operation.

**15.** The flight time exchange system according to any one of claims 1 to 14, wherein the flight time exchange system is connected or embedded in an aviation operation system, and obtains flight information and/or flight environment information from the aviation operation system.

**16.** A flight time exchange method, comprising the following steps:

step S1: obtaining a flight time exchange request or a flight time exchange requirement of at least one flight;
step S2: generating a candidate flight time exchange list based on content of the flight time exchange request or the flight time exchange requirement, wherein exchangeable flight times are sorted in the list according to a given rule.
step S3: sequentially performing exchange negotiation with flights having target flight times based on the candidate flight time exchange list; and if a flight agrees to a flight time exchange, returning information that the flight time exchange is accepted; or if none of the flights having the target flight times agree to a flight time exchange, returning information that the flight time exchange request is rejected.
step S4: when the information that the flight time exchange is accepted is obtained, determining a flight time exchange result, and publishing the flight time exchange result to flights between which a time exchange is performed.

**17.** The flight time exchange method according to claim 16, wherein the given rule comprises at least one of "a principle favorable to this flight", "a principle favorable to global flights", and "an exchange success probability principle".

**18.** The flight time exchange method according to claim 16, wherein step S3 comprises:

sending flight exchange negotiation information to a target flight, and determining, by the target flight after receiving the negotiation information, whether to perform an exchange,
wherein the negotiation information comprises flight information of a flight as an exchange initiator.

**19.** The flight time exchange method according to claim 16, wherein a flight time exchange system generates the candidate flight time exchange list based on flight exchange value FEV, and the FEV is determined based on both flight value FV and a matching success rate SR that are obtained after an exchange.

**20.** The flight time exchange method according to claim 19, wherein
when SR is less than or equal to $SR_1$, FEV = SR $\times$ $FV_0$;
when SR is greater than $SR_1$ and is less than $SR_2$, FEV = SR $\times$ FV; and
when SR is greater than or equal to $SR_2$, FEV = $SR_0$ $\times$ FV, wherein
FVo is a reference flight value, $SR_0$ is a reference matching success rate, SRi is a first reference matching success rate, and $SR_2$ is a second reference matching success rate.

**21.** The flight time exchange method according to claim 20, wherein
in step S2, the candidate flight time exchange list is a many-to-many flight time exchange solution list; and
in step S3, according to flight time exchange solutions in the list, the flight time exchange system generates a final flight exchange solution based on the flight time exchange solution list.

**22.** The flight time exchange method according to claim 21, further comprising, in step S3:

sequentially performing exchange negotiation with flights having target flight times in the flight time exchange solutions sorted based on total flight exchange value; and if all flights in a flight time exchange solution agree to a flight time exchange, returning information that the flight time exchange is accepted; or if each flight time exchange solution has a flight that does not agree to an exchange, returning information that a flight time exchange request is rejected, thereby obtaining a solution that is finally accepted by each flight; or
performing exchange negotiation on possible exchange solutions of flights in the flight time exchange solution list, analyzing actual flight exchange value corresponding to matching results for a plurality of solutions, and selecting a proper solution based on the actual flight exchange value.

**23.** The flight time exchange method according to claim 22, wherein the actual flight exchange value is calculated based on at least one of "a principle favorable to some flights", "a principle favorable to global flights", "an exchange success probability principle of some flights", and "an exchange success probability principle of global flights".

**24.** The flight time exchange method according to claim 16, wherein step S1 comprises predicting the flight time exchange requirement, and inquiring whether a flight having a potential flight time exchange requirement needs to perform a flight time exchange.

**25.** The flight time exchange method according to claim 24, wherein step S1 comprises calculating a difference between an estimated ready time ERT and a calculated flight time CFT, and when the difference is greater than a predetermined value, considering that the flight has the flight time exchange requirement.

Flight A          Flight B

Aviation
operation
system

Flight time
exchange system

**FIG. 1**

Flight A          Flight B

Flight time
exchange system

Flight management
system

Airport management
subsystem

Aviation operation
system

**FIG. 2**

Flight time
exchange system

Flight operation
system/Flights

Information
obtaining request

Flight information
Flight environment
information

**FIG. 3**

Flight time
exchange system

Aviation operation
system/Flights

Flight time exchange
request

Flight time exchange result

Flight time
exchange

{ Information about a
to-be-exchanged flight

Flight time
exchange

{ Flight time exchange
success/failure information

**FIG. 4**

Flight A

Flight time exchange system/Flight operation system

Flight B

Flight time exchange request

Flight time exchange negotiation information

Flight time negotiation result

Flight time exchange result

Flight time exchange result

**FIG. 5**

$C_1$   $D_1$   $D_x$   $D_2$   $C_2$

Time T

B   A   E

**FIG. 6**

**FIG. 7**

Flight A

Flight time exchange
system/Flight operation system

Flight B

Inquire whether the flight
has a flight time exchange
requirement

Determine that the
flight has the flight
time exchange
requirement

Flight time exchange
negotiation
information

Flight time
negotiation result

Flight time
exchange result

Flight time
exchange result

**FIG. 8**

Flight A    Flight B

Flight
management
system

Local airport
operation
system

Out-of-town
airport
operation

Flight time
exchange
system

**FIG. 9**

Flight A

Flight B

Local airport
operation
system

Flight time
exchange
system

Flight management
system

Out-of-town
airport
operation

**FIG. 10**

Flight A

Flight B

Flight
management
system

Local airport
operation
system

Out-of-town
airport
operation

Flight time
exchange
system

**FIG. 11**

<table>
<tr><td colspan="2"><strong>INTERNATIONAL SEARCH REPORT</strong></td><td>International application No.<br>PCT/CN2018/086082</td></tr>
</table>

**A. CLASSIFICATION OF SUBJECT MATTER**

G08G 5/00 (2006.01) i

According to International Patent Classification (IPC) or to both national classification and IPC

**B. FIELDS SEARCHED**

Minimum documentation searched (classification system followed by classification symbols)

G08G; G06Q; G06F

Documentation searched other than minimum documentation to the extent that such documents are included in the fields searched

Electronic data base consulted during the international search (name of data base and, where practicable, search terms used)

CNTXT; CNABS; CNKI; CFJD: 航班, 时刻, 时间, 调换, 交换, 调度, 调整, 规则, 原则, 条件, CDM WPI; SIPOABS: flight, time, schedule, adjust+, exchang+, attemper+, rule, formula, condition, CDM

**C. DOCUMENTS CONSIDERED TO BE RELEVANT**

| Category* | Citation of document, with indication, where appropriate, of the relevant passages | Relevant to claim No. |
|---|---|---|
| PY | CN 107170297 A (WENZHOU YUNHANG INFORMATION TECHNOLOGY CO., LTD.) 15 September 2017 (15.09.2017), description, paragraphs [0010]-[0055] | 1-3, 7-18, 24, 25 |
| PY | CN 107204131 A (WENZHOU YUNHANG INFORMATION TECHNOLOGY CO., LTD.) 26 September 2017 (26.09.2017), description, paragraphs [0028]-[0091] | 1-3, 7-18, 24, 25 |
| Y | CN 106845660 A (BOE TECHNOLOGY GROUP CO., LTD.) 13 June 2017 (13.06.2017), description, paragraphs [0061]-[0132] | 1-3, 7-18, 24, 25 |
| A | US 2017069213 A1 (RAYTHEON CO.) 09 March 2017 (09.03.2017), entire document | 1-25 |
| A | CN 106845856 A (MINHANG CHENGDU INFORMATION TECHNOLOGY CO., LTD.) 13 June 2017 (13.06.2017), entire document | 1-25 |
| A | CN 103426331 A (NANJING LES INFORMATION TECHNOLOGY CO., LTD.) 04 December 2013 (04.12.2013), entire document | 1-25 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 August 2018 | 14 August 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>SHEN, Lijuan<br><br>Telephone No. (86-10) 62089905 |

Form PCT/ISA /210 (second sheet) (July 2009)

## INTERNATIONAL SEARCH REPORT
### Information on patent family members

International application No.

PCT/CN2018/086082

| Patent Documents referred in the Report | Publication Date | Patent Family | Publication Date |
|---|---|---|---|
| CN 107170297 A | 15 September 2017 | None | |
| CN 107204131 A | 26 September 2017 | None | |
| CN 106845660 A | 13 June 2017 | None | |
| US 2017069213 A1 | 09 March 2017 | None | |
| CN 106845856 A | 13 June 2017 | None | |
| CN 103426331 A | 04 December 2013 | CN 103426331 B | 27 May 2015 |

Form PCT/ISA /210 (patent family annex) (July 2009)